# EUROPÄISCHE PATENTANMELDUNG

(11) **EP 4 375 615 A1**
(43) Veröffentlichungstag der Anmeldung: **29.05.2024**
(21) Anmeldenummer: 23196169.9
(22) Anmeldetag: 08.09.2023
(51) Int. Cl.: G01C 15/06, G01C 15/02, F16M 13/02, F16M 11/10, F16M 11/20

(54) **SYSTEM MIT ZUMINDEST ZWEI VERMESSUNGSMARKEN UND ZUMINDEST ZWEI ANKERELEMENTEN**

(30) Priorität: 20.09.2022 DE 202022105290 U
(71) Anmelder: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(57) **Zusammenfassung**

Ein System zum flexiblen Markieren eines Referenzpunkts wird bereitgestellt. Das System umfasst zumindest zwei Ankerelemente (200) mit jeweils einer ersten Verbindungsstruktur (202), und zumindest zwei Vermessungsmarken (100) mit jeweils einer zweiten Verbindungsstruktur (102) und einem optisch erfassbaren Vermessungsbereich. Die jeweilige erste Verbindungsstruktur (202) und die jeweilige zweite Verbindungsstruktur (102) sind reversibel verbindbar. Das System hat einen Markierungszustand, in dem jeweils eines der Ankerelemente (200) mit jeweils einer der Vermessungsmarken (100) verbunden ist. In dem Markierungszustand hat ein Zentrum des Vermessungsbereichs der jeweiligen Vermessungsmarken (100) einen vorbestimmten Abstand von dem Referenzpunkt.

## Beschreibung

Die vorliegende Erfindung betrifft ein System zum flexiblen Markieren eines Referenzpunkts mit zumindest zwei Ankerelementen und mit zumindest zwei Vermessungsmarken.

Vermessungsmarken werden üblicherweise an ortsfesten Objekten wie zum Beispiel Gebäuden oder im Bereich von Bahngleisanlagen an Elektromasten angebracht. Sie können dort einen Referenzpunkt markieren, der unter Verwendung an sich bekannter Messgeräte wie zum Beispiel Laser, Scanner und Totalstationen vermessen werden soll. Als Vermessungsmarken kommen dementsprechend verschiedenartige Marken wie etwa speziell für Laserscanner oder Drohnen bestimmte Zielmarken und Schilde, klappbare Marken, Klebemarken, Bodenmarken etc. in Betracht, die für den jeweiligen Einsatz optimiert sind. Diese verschiedenen Vermessungsmethoden und die jeweils darauf abgestimmten Marken haben zur Folge, dass eine Vielzahl an verschiedenen Marken bereitgehalten werden muss, sofern eine Vielzahl an Einsatzmöglichkeiten abgedeckt werden soll. Weiterhin ist es notwendig, die Marken auszutauschen, sofern Referenzpunkte mit verschiedenen Vermessungsmethoden und ihren jeweils darauf abgestimmten Marken vermessen werden sollen. Dieser Wechsel von Marken an Referenzpunkten ist aufwändig, fehlerträchtig und oftmals gar nicht möglich.

Es ist Aufgabe der Erfindung, ein System anzugeben, mit dem ein Referenzpunkt mit Hilfe von verschiedenen Vermessungsmethoden einfach und schnell vermessen werden kann.

Diese Aufgabe wird durch den Gegenstand des unabhängigen Anspruchs gelöst. Vorteilhafte Weiterbildungen sind in den abhängigen Ansprüchen angegeben.

Ein System zum flexiblen Markieren eines Referenzpunkts umfasst zumindest zwei Ankerelemente mit je einer ersten Verbindungsstruktur und zumindest zwei Vermessungsmarken mit je einer zweiten Verbindungsstruktur und je einem optisch erfassbaren Vermessungsbereich. Die jeweilige erste Verbindungsstruktur und die jeweilige zweite Verbindungsstruktur sind reversibel verbindbar, und das System hat einen Markierungszustand, in dem jeweils eines der Ankerelemente mit jeweils einer der Vermessungsmarken verbunden ist und in dem ein Zentrum des Vermessungsbereichs der jeweiligen Vermessungsmarken einen vorbestimmten Abstand von dem Referenzpunkt hat.

Eines der Ankerelemente kann an dem Referenzpunkt angebracht sein, so dass eine der mit dem Ankerelement verbundenen Vermessungsmarken relativ zu dem Referenzpunkt angeordnet ist. Der Referenzpunkt kann sich an einem Vermessungsobjekt befinden, so kann die Vermessungsmarke mit Hilfe des Ankerelements relativ zu dem Referenzpunkt auch an ein Vermessungsobjekt angebracht werden.

Die Vermessungsmarken umfassen den optisch erfassbaren Vermessungsbereich, der insbesondere zur Vermessung der Vermessungsmarken mit Hilfe von Totalstationen geeignet ist oder auch mit Hilfe einer Drohne aufgenommen werden kann. Vorzugsweise ist der Vermessungsbereich symmetrisch. Vorzugsweise ist das Zentrum des Vermessungsbereich der jeweiligen Vermessungsmarke in dem Markierungszustand aller Vermessungsmarken in demselben Abstand bzw. an derselben Position relativ zu dem Referenzpunkt angeordnet.

Mit Hilfe des Systems können Referenzpunkte einfach und flexibel markiert werden, indem ein passendes Ankerelement an einem Referenzpunkt angebracht wird. Verschiedene Vermessungsmarken, insbesondere mit jeweils verschiedenen Vermessungsbereichen, können dann einfach mit dem Ankerelement verbunden werden und der so markierte Referenzpunkt kann auf verschiedene, jeweils geeignete Arten vermessen werden bzw. dessen Position auf verschiedene Arten bestimmt werden. Beispielsweise kann der Referenzpunkt mit einer für eine Drohne optimierten Vermessungsmarke und mit einer für eine Totalstation optimierte Vermessungsmarke vermessen werden. Dabei können die Vermessungsmarken schnell und einfach ausgetauscht werden. Da die verschiedenen Vermessungsmarken relativ zu dem Referenzpunkt gleich angeordnet sind bedarf es keiner Korrektur des Abstands.

Alternativ oder zusätzlich kann das System verwendet werden um mehrere Referenzpunkte zu markieren. So können beispielsweise eine Vielzahl jeweils passender Ankerelemente an Referenzpunkten angeordnet werden. Eine einzelne oder mindestens zwei Vermessungsmarken können dann abwechselnd mit den Ankerelementen verbunden werden, um den jeweiligen Referenzpunkt zu markieren und zu vermessen.

Bis zur nächsten Benutzung können die Vermessungsmarken einfach und schnell abgebaut werden, so dass nur das Ankerelement übrigbleibt. Das ermöglicht eine platzsparende, materialsparende Vorgehensweise und vermeidet unabsichtliche oder absichtliche Beschädigung.

Besonders vorteilhaft ist, dass die erste Verbindungsstruktur als ein abgerundetes nichtkonvexes Polygon ausgeführt ist, vorzugsweise als punktsymmetrisch und abgerundete Sternform bzw. Blumenform. Dies ermöglicht insbesondere eine drehfeste Verbindung des Ankerelements und der Vermessungsmarke.

Vorteilhaft ist, dass die erste Verbindungsstruktur aus Metall gefertigt ist, insbesondere aus Edelstahl. Vorzugsweise ist das Ankerelement aus Metall, insbesondere Edelstahl gefertigt. Dies macht die Verbindungsstruktur bzw. das Ankerelement besonders robust.

Vorzugsweise umfasst die zweite Verbindungsstruktur eine Vertiefung, in die die erste Verbindungsstruktur formschlüssig einsetzbar ist. Eingesetzt sind die Vermessungsmarke und das Ankerelement verbunden. Sie befinden sich dann in dem Markierungszustand. Dies ermöglicht eine besonders einfache Verbindung der Vermessungsmarke mit dem Ankerelement.

Vorzugsweise umfasst die zweite Verbindungsstruktur zumindest einen Magneten. Der Magnet ist insbesondere ausgebildet, die erste Verbindungsstruktur in der zweiten Verbindungsstruktur zu halten. Das ermöglicht eine besonders sichere Verbindung, die dennoch reversibel ist.

Vorzugsweise sind die Ankerelemente formschlüssig, kraftschlüssig und/oder stoffschlüssig mit dem Referenzpunkt bzw. dem Vermessungsobjekt verbindbar. Dies ermöglicht eine besonders flexible Anbringung der Ankerelemente an dem Referenzpunkt.

Besonders bevorzugt ist es, dass zumindest eines der Ankerelemente eines der folgenden Elemente umfasst: einen Saugnapf, einen Standfuß, und Schraubelement. Dies ermöglicht eine besonders flexible Anbringung der Ankerelemente an dem Referenzpunkt und einen flexiblen Einsatz des Systems.

Vorzugsweise umfassen die Vermessungsmarken, insbesondere der Vermessungsbereich, jeweils zumindest eines der folgenden Elemente: ein Reflektionsmuster, ein retroreflektierendes Prisma, und ein Markierungsmuster. Dies ermöglicht ein besonders flexibles Erfassen der Vermessungsmarken und einen flexiblen Einsatz des Systems.

Bevorzugt ist, dass zumindest eine der Vermessungsmarken einen Verstellmechanismus umfasst, so dass die Vermessungsmarke, insbesondere der Vermessungsbereich, um zumindest eine Achse, vorzugsweise um zwei Achsen, verstellbar ist. Insbesondere ist der Vermessungsbereich verstellbar. Eine der Achsen kann dabei die Kippachse sein. So kann die Vermessungsmarke unabhängig von dem Referenzpunkt oder dem Ankerelement ausgerichtet werden. Eine der Achsen kann auch als Kippachse bezeichnet werden. Die Kippachse kann das Zentrum des Vermessungsbereichs der jeweiligen Vermessungsmarke schneiden. Der Abstand zwischen dem Referenzpunkt und der Kippachse wird dann auch als Kippachshöhe bezeichnet und entspricht dem vorbestimmten Abstand. Insbesondere kann der Vermessungsbereich um die Kippachse symmetrisch angeordnet sein.

Vorzugsweise ist der vorbestimmte Abstand in einem Bereich von 40 mm bis 50 mm oder in einem Bereich von 95 mm bis 105 mm. Besonders bevorzugt ist ein vorbestimmter Abstand von 45 mm oder 100 mm. Das ermöglicht eine besonders kompakte Bauweise.

Weitere Merkmale und Vorteile ergeben sich aus der folgenden Beschreibung, die beispielhafte Ausführungsformen in Verbindung mit den beigefügten Figuren näher erläutert.

Es zeigen:
Fig. 1 Ansichten von Vermessungsmarken eines Systems zum flexiblen Markieren eines Referenzpunkts, und
Fig. 2 Ansichten von Ankerelementen des Systems zum flexiblen Markieren des Referenzpunkts.

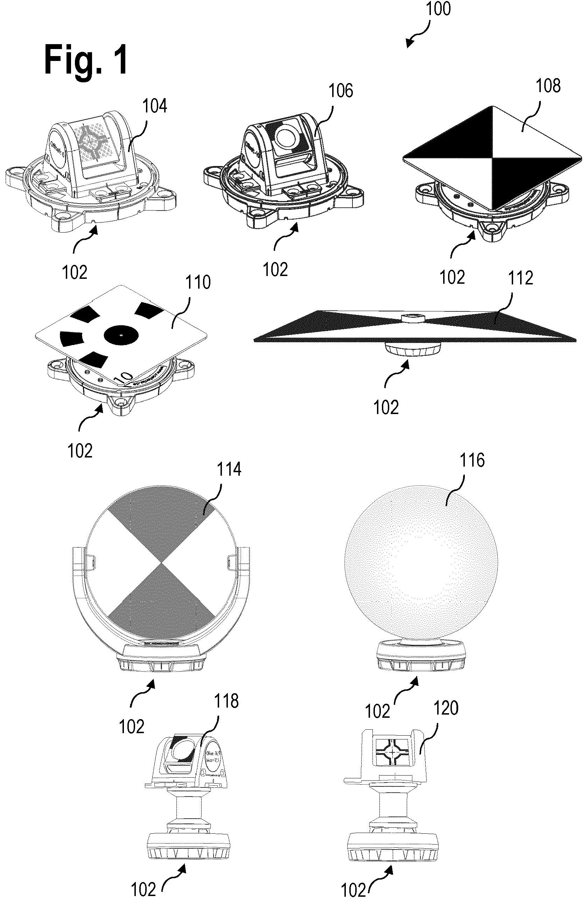

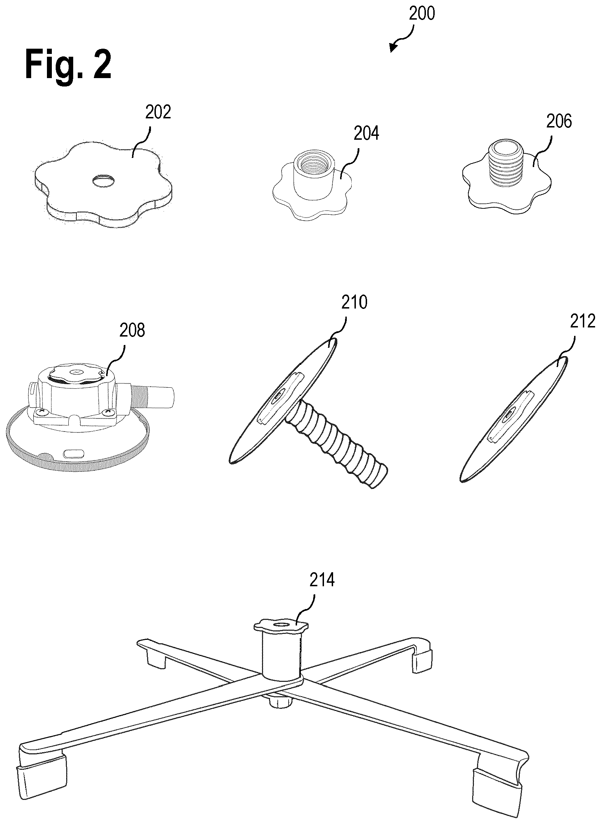

Figur 1 zeigt Ansichten von neun Vermessungsmarken 100 eines Systems zum flexiblen Markieren eines Referenzpunkts. Figur 2 zeigt Ansichten von sieben Ankerelementen 200 des Systems zum flexiblen Markieren eines Referenzpunkts. Das System zum flexiblen Markieren eines Referenzpunkts umfasst also die Vermessungsmarken 100 und die Ankerelemente 200.

Die Ankerelemente 200 können jeweils an einen Referenzpunkt angebracht werden oder an einem Vermessungsobjekt angebracht werden, das den Referenzpunkt umfasst. So sind die Ankerelemente 200 jeweils ortsfest relativ zu dem Referenzpunkt angeordnet. Die Ankerelemente 200 können mit dem Referenzpunkt beziehungsweise dem Vermessungsobjekt kraftschlüssig, formschlüssig und/oder stoffschlüssig verbunden werden.

Die Vermessungsmarken 100 sind jeweils mit den Ankerelementen 200 verbindbar. Dazu haben die Ankerelemente 200 und die Vermessungsmarken 100 jeweils zueinander passende Verbindungsstrukturen. Jedes der Ankerelemente 200 umfasst eine erste Verbindungsstruktur 202, das in der Draufsicht als abgerundetes nichtkonvexes Polygon ausgeführt ist. Die erste Verbindungsstruktur 202 weist beispielsweise eine abgerundete Sternform auf, die vorzugsweise punktsymmetrisch ist. In Figur 2 sind die ersten Verbindungsstrukturen 202 als abgerundetes Hexagramm dargestellt. Vorzugsweise sind die zweiten Verbindungsstrukturen 202 aus Metall, insbesondere Edelstahl, gefertigt und magnetisch.

Die erste Verbindungsstruktur 202 kann in zweite Verbindungsstrukturen 102 reversibel eingesetzt werden, die jeweils an den Vermessungsmarken 100 angeordnet sind. Die zweiten Verbindungsstrukturen 102 sind jeweils an einer in Figur 1 nicht dargestellten Unterseite der Vermessungsmarken 100 angeordnet. Die zweiten Verbindungsstrukturen 102 sind insbesondere Vertiefungen, in die die ersten Verbindungsstrukturen 202 formschlüssig eingesetzt werden können. Zusätzlich können die zweiten Verbindungsstrukturen 102 Magnete umfassen, um die ersten Verbindungsstrukturen 202 ohne weitere Befestigungsmittel in den zweiten Verbindungsstrukturen 102 zu halten.

Jede der Kombinationen von den in Figur 1 gezeigten Vermessungsmarken 100 und den in Figur 2 gezeigten Ankerelementen 200 des Systems zum flexiblen Markieren ermöglicht es einem Benutzer, zunächst eines der Ankerelemente 200 an einem Referenzpunkt anzubringen und anschließend eine der Vermessungsmarken 100 an dem Ankerelement anzubringen, indem die eine der Vermessungsmarken 100 mit der als Vertiefung ausgeführten zweiten Verbindungsstruktur 102 auf die erste Verbindungsstruktur 202 des Ankerelements 200 gesteckt wird. Weiterhin kann die eine der Vermessungsmarken 100 durch den Benutzer einfach von dem Ankerelement 200 gelöst werden und bei Bedarf durch eine andere der Vermessungsmarken 100 ersetzt werden.

Die Vermessungsmarken 100 des Systems können beispielsweise die folgenden Elemente mit jeweils einem Vermessungsbereich umfassen: Eine Reflexzielmarke 104, insbesondere mit einem Reflektionsmuster als Vermessungsbereich, kann insbesondere zusammen mit einer Totalstation über kurze Distanzen eingesetzt werden. Eine Prismazielmarke 106, insbesondere mit einem retroreflektierenden Tripel-Prisma als Vermessungsbereich, kann insbesondere zusammen mit einer Totalstation über lange Distanzen eingesetzt werden. Eine Laserscanner-Marke 108 kann insbesondere zusammen mit einem Laserscanner eingesetzt werden. Eine Drohnen-Marke 110 kann insbesondere zusammen mit einer Drohne eingesetzt werden oder in einem Tunnel mit Mobile-Mapping Fahrzeugen verwendet werden. Ein Drohnen-Schild 112 kann insbesondere zusammen mit einer Drohne auf große Distanzen eingesetzt werden. Eine weitere Laserscanner-Marke 114 kann insbesondere mit einem Laserscanner eingesetzt werden. Eine Laserscanner-Kugel 116 kann insbesondere mit einem Laserscanner eingesetzt werden. Eine weiterer Prismazielmarke 118 kann insbesondere mit einer Totalstation eingesetzt werden. Eine weitere Reflexzielmarke 120 kann insbesondere mit einer Totalstation eingesetzt werden.

Die Marken 104, 106, 108, 110, 112 haben einen vorbestimmten Abstand zwischen dem Referenzpunkt und dem Zentrum des Vermessungsbereichs, insbesondere eine Kippachshöhe, von 45 mm. So können die Marken 104, 106, 108, 110, 112 gegeneinander ausgetauscht werden, ohne dass sich der Abstand zwischen einem Referenzpunkt und der jeweiligen Marke 104, 106, 108, 110, 112 ändert bzw. ohne dass sich die Position des Zentrums des jeweiligen Vermessungsbereichs ändert. Dadurch, dass der Abstand bzw. die Position konstant bleibt müssen diese beim Austauschen der Marken 104, 106, 108, 110, 112 nicht berücksichtigt werden. Ebenso haben die Marken 114, 116, 118, 120 einen Abstand von 100 mm.

Die Ankerelemente 200 des Systems können beispielsweise die folgenden Elemente umfassen: schraubbare Ankerelemente 204, 206 können insbesondere auf einen Referenzpunkt oder ein Vermessungsstativ aufgeschraubt werden. Ein Saugnapf 208 kann insbesondere auf glatten Oberflächen wie Glasfassaden angebracht werden. Ein Ankerelement 210 kann insbesondere in Ankerhülsen eingeschraubt werden. Das Ankerelement 210 kann verschieden lange Schraubbereich haben, insbesondere für ein Einbringen in loses Gestein ist der Schraubbereich verlängert. Ein weiteres Ankerelement 212 kann insbesondere an metallene Werkstoffe angeschweißt werden oder alternativ angeklebt werden. Ein Standfuß 214 kann insbesondere auf dem Boden aufgestellt oder eingedrückt werden. So können alle Ankerelemente 200 ortsfest relativ zu einem Referenzpunkt angeordnet werden.

Beispielhaft ist im Folgenden eine Anwendung des Systems erläutert.

Zunächst können an einem oder mehreren Referenzpunkten jeweils passende Ankerelemente angebracht werden. Beispielsweise kann an Bauwerken das Ankerelement 212 dauerhaft angeschweißt oder angeklebt werden. Der Standfuß 214 kann auf dem Boden platziert werden. Zur genauen Positionsbestimmung der Referenzpunkte können auf die jeweiligen Ankerelemente geeignete Vermessungsmarken gesteckt werden, beispielsweise Prismavermessungsmarken 106, und mit Hilfe einer Totalstation eingemessen werden. Danach können die Vermessungsmarken einfach und schnell getauscht werden, beispielsweise in Drohnenmarken 110 oder Schilde 112. Die Ankerelemente können dabei an den Referenzpunkte verbleiben, lediglich die Vermessungsmarken werden getauscht. Mit Hilfe einer Drohne und den mit Drohnenmarken 110, 112 markierten Referenzpunkten kann dann ein Geländemodell von der Umgebung erstellt werden. Da das Zentrum des Vermessungsbereichs bzw. die Kippachshöhe in dem Markierungszustand unabhängig von der konkreten Vermessungsmarke 100 immer an derselben Position sind, ist eine genaue Zuordnung der Referenzpunkte in den Vermessungsdaten der Totalstation und in den Geländemodelldaten ohne weitere Anpassung möglich. Dies erlaubt eine besonders schnelle und präzise Arbeitsweise. Wenn das Vermessen beendet ist, können die Vermessungsmarken einfach wieder abgenommen werden, und nur die unauffälligen Ankerelemente 200 bleiben zurück. Bei einem nächsten Einsatz können die bereits mit Ankerelementen 200 ausgestatteten Referenzpunkte erneut vermessen werden.

### Bezugszeichenliste

- 100: Vermessungsmarken
- 102: zweite Verbindungsstruktur
- 104, 120: Reflexzielmarke
- 106,118: Prismazielmarke
- 108, 114: Laserscanner-Marke
- 110: Drohnen-Marke
- 112: Drohnen-Schild, Schild für Mobile-Mapping
- 116: Laserscanner-Kugel
- 200: Ankerelemente
- 202: erste Verbindungsstruktur
- 204, 206: schraubbares Ankerelement
- 208: Saugnapf
- 210: Ankerhülsen Ankerelement
- 212: schweißbares oder klebbares Ankerelement
- 214: Standfuß

## Patentansprüche

1. System zum flexiblen Markieren eines Referenzpunkts, umfassend:
zumindest zwei Ankerelemente (200) mit jeweils einer ersten Verbindungsstruktur (202), und
zumindest zwei Vermessungsmarken (100) mit jeweils einer zweiten Verbindungsstruktur (102) und einem optisch erfassbaren Vermessungsbereich,
wobei die jeweilige erste Verbindungsstruktur (202) und die jeweilige zweite Verbindungsstruktur (102) reversibel verbindbar sind, und
wobei das System einen Markierungszustand hat, in dem jeweils eines der Ankerelemente (200) mit jeweils einer der Vermessungsmarken (100) verbunden ist, und
wobei in dem Markierungszustand ein Zentrum des Vermessungsbereichs der jeweiligen Vermessungsmarken (100) einen vorbestimmten Abstand von dem Referenzpunkt hat.

2. System nach Anspruch 1, wobei die erste Verbindungsstruktur (202) als ein abgerundetes nichtkonvexes Polygon ausgeführt ist.

3. System nach einem der vorhergehenden Ansprüche, wobei die erste Verbindungsstruktur (202) aus Metall gefertigt ist, insbesondere aus Edelstahl.

4. System nach einem der vorhergehenden Ansprüche, wobei die zweite Verbindungsstruktur (102) eine Vertiefung umfasst, in die die erste Verbindungsstruktur (202) formschlüssig einsetzbar ist.

5. System nach einem der vorhergehenden Ansprüche, wobei die zweite Verbindungsstruktur (102) zumindest einen Magneten umfasst.

6. System nach einem der vorhergehenden Ansprüche, wobei die Ankerelemente (200) formschlüssig, kraftschlüssig und/oder stoffschlüssig mit dem Referenzpunkt verbindbar sind.

7. System nach einem der vorhergehenden Ansprüche, wobei zumindest eines der Ankerelemente (200) eine der folgenden Elemente umfasst: einen Saugnapf, einen Standfuß, und Schraubelement.

8. System nach einem der vorhergehenden Ansprüche, wobei die Vermessungsmarken (100)jeweils zumindest eine der folgenden Elemente umfasst: ein Reflektionsmuster, ein retroreflektierendes Prisma, und ein Markierungsmuster.

9. System nach einem der vorhergehenden Ansprüche, wobei zumindest eine der Vermessungsmarken (100) einen Verstellmechanismus umfasst, so dass die Vermessungsmarke (100) um zumindest eine Achse, vorzugsweise um zwei Achsen, verstellbar ist.

10. System nach einem der vorhergehenden Ansprüche, wobei der vorbestimmte Abstand in einem Bereich von 40 mm bis 50 mm ist oder in einem Bereich von 95 mm bis 105 mm ist.
